Europäisches Patentamt

(19) European Patent Office

Office européen des brevets

(11) Numéro de publication: **0 267 124**
**A1**

(12) # DEMANDE DE BREVET EUROPEEN

(21) Numéro de dépôt: **87402503.4**

(22) Date de dépôt: **05.11.87**

(51) Int. Cl.⁴: **A 23 N 4/04**

(30) Priorité: **05.11.86 FR 8615416**
**04.06.87 FR 8707828**

(43) Date de publication de la demande:
**11.05.88 Bulletin 88/19**

(84) Etats contractants désignés:
**AT BE CH DE ES FR GB GR IT LI LU NL SE**

(71) Demandeur: **S.A. Auximat Levage**
**Z.A. Le Grand Pré**
**F-95460 Marines (FR)**

(72) Inventeur: **Petit, Gaston**
**8, rue des Coquelicots**
**F-95000 Cergy (FR)**

**Monteiro, Daniel**
**11, rue Georges Buffon**
**F-78200 Mantes La Jolle (FR)**

(74) Mandataire: **Plaçais, Jean-Yves**
**Cabinet Netter 40, rue Vignon**
**F-75009 Paris (FR)**

(54) **Dispositif pour dénoyauter des fruits, en particulier des pruneaux.**

(57) Les pruneaux sont supportés chacun par un auget annulaire (21A) du bac (20A), sur lequel auget vient en appui un manchon (50A) monté coulissant à l'encontre d'un rappel élastique (52A) sur une tige de dénoyautage (46A). Les manchons (50A) sont juxtaposés les uns aux autres tandis que les tiges (46A) sont actionnées simultanément par un vérin (43A). Le contrôle de la chute des noyaux est effectué par des moyens de détection (90A). Ces moyens de détection (90A) sont connectés à un automate programmable (95A) qui commande l'actionnement des moyens d'évacuation des pruneaux dénoyautés ou non dénoyautés le cas échéant en fonction des valeurs captées par les moyens de détection (90A).

EP 0 267 124 A1

FIG.4

## Description

<u>Dispositif pour dénoyauter des fruits, en particulier des pruneaux.</u>

L'invention concerne l'industrie de conditionnement des pruneaux, qui sont obtenus par dessication de prunes crues.

Les pruneaux peuvent être vendus tels quels. Mais il est de plus en plus courant de commercialiser des pruneaux dénoyautés et fourrés, ce qui nécessite de les débarrasser préalablement de leurs noyaux, opération que l'on appellera ci-après "dénoyautage".

Jusqu'à présent, cette opération nécessite l'intervention de personnels. Les dispositifs connus comprennent des moyens propres à actionner une tige ou poinçon de dénoyautage, pour qu'elle descende au niveau d'un poste de maintien du pruneau. C'est là qu'un opérateur ou une opératrice maintient le pruneau dans la bonne position pour qu'il puisse être dénoyauté.

La présente invention a essentiellement pour but de fournir un dispositif permettant un dénoyautage de fruits, en particulier de pruneaux, et ce d'une manière entièrement automatique.

Elle a également pour but de fournir un tel dispositif qui puisse être aisément installé dans une chaîne de conditionnement de pruneaux.

Le dispositif proposé, qui est du type précité, est remarquable en ce que le poste de maintien est défini par un auget annulaire propre à recevoir le pruneau en position sensiblement verticale, ainsi que par un manchon monté coulissant sur la tige de dénoyautage, et propre à être entraîné avec elle sous l'effet d'un rappel élastique, ce manchon possédant une extrémité libre évidée en correspondance de l'auget et en regard de celui-ci.

Selon un autre aspect de l'invention, l'auget possède une partie annulaire interne de révolution, dont la génératrice est constituée, vers le haut, d'au moins deux segments de droite d'obliquité croissante, tandis que l'évidement homologue du manchon possède une section droite de révolution en forme générale de V ouvert.

Très avantageusement, le manchon et l'auget possèdent, en périphérie, des moyens permettant leur centrage l'un relativement à l'autre.

Selon un autre aspect de l'invention, le dispositif comporte un tapis roulant équipé d'une pluralité d'augets identiques, propres à venir séquentiellement en coopération avec l'ensemble tige-manchon, le tapis roulant étant perforé au droit du passage interne de chaque auget, et muni d'un renfort sous-jacent, également perforé, au droit de l'ensemble tige-manchon.

Selon un autre aspect de l'invention, l'installation est complétée, en amont de l'ensemble tige-manchon, par un bol vibrant propre à amener les pruneaux un à un, en position sensiblement verticale, dans les augets successifs.

La présente invention a également pour objet un dispositif permettant de dénoyauter simultanément plusieurs fruits à la fois.

Selon une définition générale de la variante de l'invention, les moyens d'actionnement comprennent plusieurs ensembles tige-manchon associés chacun à un auget annulaire.

Très avantageusement, les manchons et les augets annulaires possèdent, en leur périphérie, des moyens permettant le centrage des augets relativement aux manchons.

Selon un autre aspect de la variante de l'invention, le dispositif comporte un tapis roulant équipé d'une pluralité de bacs identiques comprenant chacun une rangée d'augets annulaires juxtaposés les uns aux autres, lesdits bacs étant propres à venir séquentiellement en coopération avec les ensembles tige-manchon pour chacun desquels est associé respectivement un auget annulaire, le tapis roulant étant perforé au droit du passage interne de chaque auget, et muni d'un renfort sous-jacent également perforé, au droit des ensembles tige-manchon.

Selon un autre aspect de la variante de l'invention, l'installation est complétée, en amont de chaque ensemble tige-manchon, par un bol vibrant propre à amener les pruneaux un à un, en position sensiblement verticale, dans les augets respectifs des bacs successifs.

De préférence, les ensembles tige-manchon sont actionnés simultanément par un vérin.

Selon un mode de réalisation préféré du dispositif de la variante de l'invention, le dispositif comporte des moyens de détection propres à contrôler la chute des noyaux après qu'ils aient traversé un auget respectif ainsi que des moyens propres à les recueillir.

Selon un autre mode de réalisation préféré du dispositif de la variante de l'invention, le dispositif comporte, en aval de chaque ensemble tige-manchon, des premiers moyens d'évacuation propres à évacuer respectivement des augets des bacs successifs les pruneaux non dénoyautés détectés par les moyens de contrôle ainsi que des seconds moyens d'évacuation placés en aval des premiers moyens d'évacuation et propres à évacuer respectivement des augets des bacs successifs les pruneaux dénoyautés.

Selon encore un autre mode de réalisation préféré du dispositif de la variante de l'invention, le dispositif comporte des moyens pour recueillir sélectivement les pruneaux dénoyautés et les pruneaux non dénoyautés, après qu'ils ont été respectivement évacués des augets respectifs des bacs successifs.

De préférence, les premiers et seconds moyens d'évacuation comprennent des poinçons d'évacuation commandés par au moins un vérin.

Très avantageusement, le dispositif selon la variante de l'invention comporte un automate programmable propre à commander l'actionnement des premiers et seconds moyens d'évacuation en fonction des valeurs captées par les moyens de détection.

D'autres caractéristiques et avantages de l'invention apparaîtront à l'examen de la description détaillée ci-après, et des dessins annexés, sur lesquels :

- la figure 1 est une vue latérale d'une installation de dénoyautage selon l'invention;

- la figure 2 est une vue en bout de la même installation de dénoyautage;

- la figure 3 est une vue partielle, plus détaillée, permettant de mieux comprendre un élément essentiel du dispositif de dénoyautage selon l'invention;

- la figure 4 est une vue latérale par l'avant d'une installation de dénoyautage selon la variante de l'invention;

- la figure 5 représente schématiquement un bac comportant plusieurs augets annulaires selon la variante de l'invention;

- la figure 6 est une vue en bout de la meme installation de dénoyautage montrant les ensembles tige-manchon selon la variante de l'invention;

- la figure 7 est une vue latérale par l'arrière de l'installation de dénoyautage montrant les moyens d'évacuation selon la variante de l'invention; et

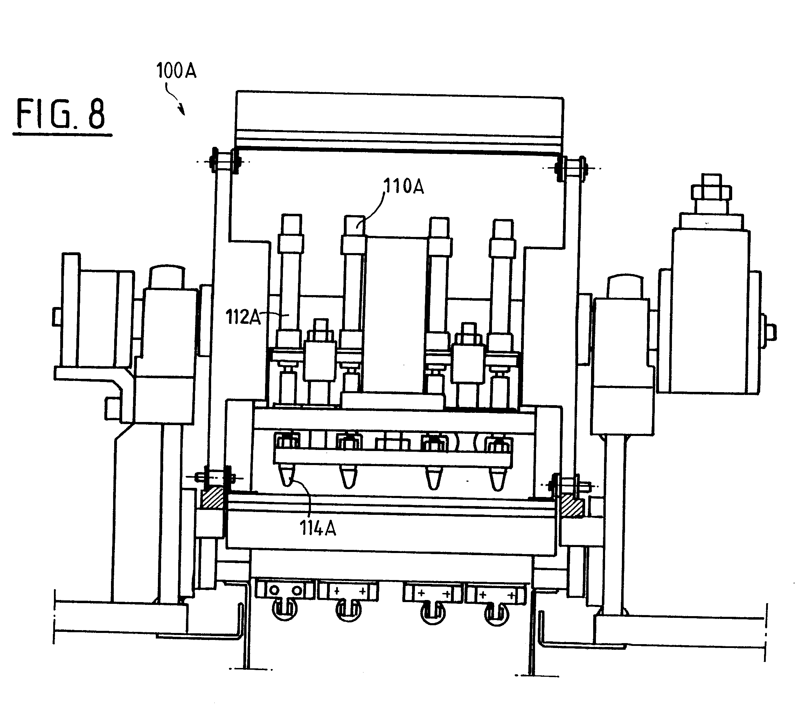

- la figure 8 est une vue partielle, plus détaillée, illustrant le fonctionnement des moyens d'évacuation des pruneaux selon la variante de l'invention.

Les dessins annexés comportent à de nombreux titres des éléments de caractère certain. Ils pourront donc non seulement servir à éclairer la description ci-après, mais aussi contribuer à la définition de l'invention, le cas échéant. Ceci est tout particulièrement vrai pour les formes particulières impliquées dans les opérations de dénoyautage et d'évacuation proprement dites.

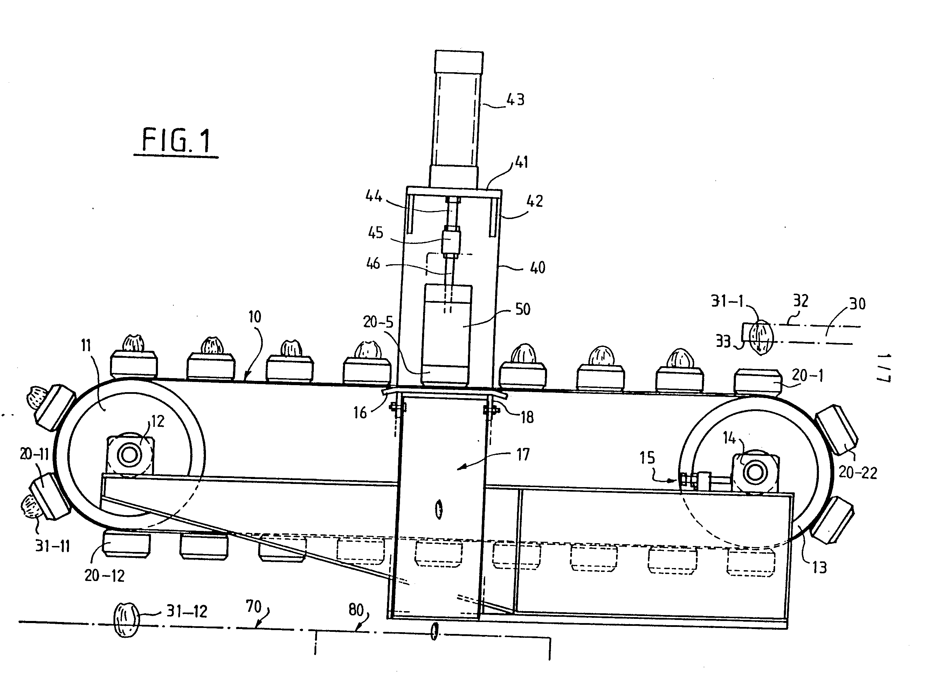

Sur la figure 1, un tapis roulant 10 circule autour de deux rouleaux d'extrémités 11 et 13, portés respectivement par des paliers 12 et 14, et dont l'un est mû par un moteur (non représenté). Le palier 14 est réglable en position sous l'effet d'une vis 15 pour permettre la tension du tapis 10.

Il est prévu, par exemple sensiblement au milieu de l'espace compris entre les rouleaux 11 et 13, un dispositif de dénoyautage proprement dit.

Celui-ci fait intervenir un renfort 16 sous-jacent au tapis 10, et muni vers le bas d'équerres telles que 18 permettant la fixation d'une goulotte 17 pour l'évacuation des noyaux.

Sur le tapis roulant sont montés des augets 20, qui sont ici au nombre de 22, et distingués par un suffixe matérialisant leur ordre, à partir de l'endroit où les pruneaux sont placés dans les augets.

Cette opération est effectuée par un bol vibrant 30, du type cylindrique, équipé d'une glissière hélicoïdale 32. Cette glissière 32 permet, sous l'effet de vibrations, de redresser verticalement le pruneau et de le véhiculer jusqu'à la glissière vibrante de distribution 33, placée directement au-dessus de l'auget de centrage 20.

Ce bol délivre les pruneaux un à un dans les augets, d'une manière contrôlée, en fonction de l'avancement pas à pas des augets et du tapis roulant 10. On voit ici un pruneau 31-1 qui descend dans l'auget 20-1.

Les augets suivants sont donc déjà munis de leurs pruneaux, vers la gauche, sur la partie haute du tapis roulant 10.

L'auget 20-5 comprend un pruneau (non visible sur la figure 1), qui va être dénoyauté.

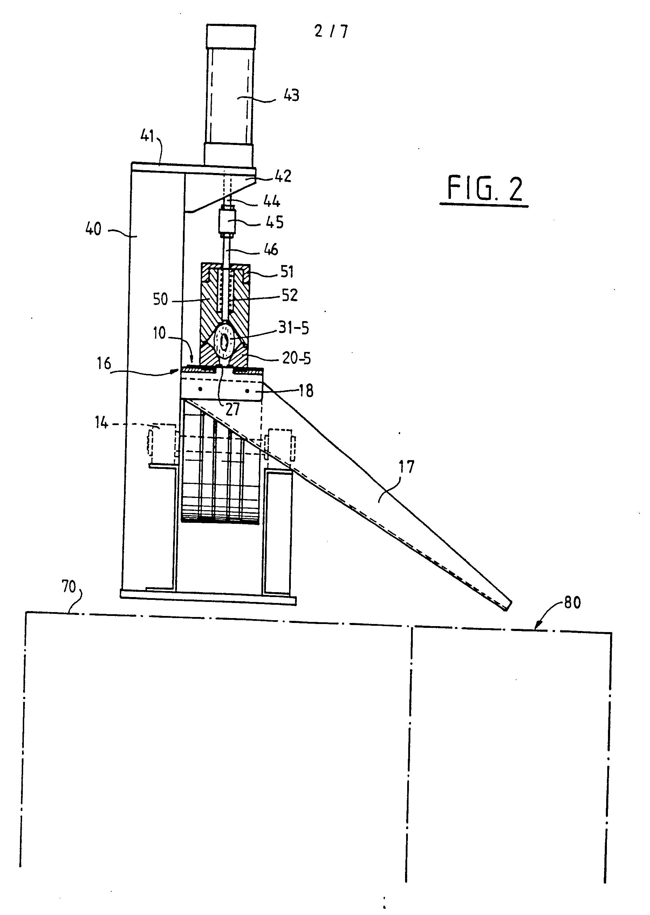

Pour cela, un vérin 43, par exemple pneumatique, est monté sur une plaque support 41 tenue par des équerres 42 sur un bâti 40 (figures 1 et 2). Le vérin 43 actionne une tige 44 qui, par une connexion de relais 45, actionne la tige de dénoyautage 46 proprement dite.

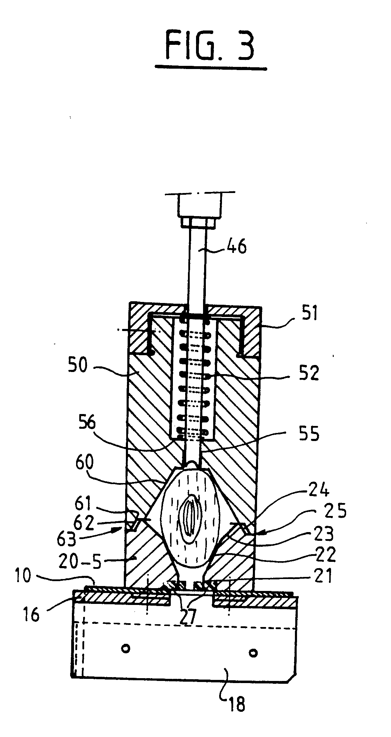

Celle-ci possède une extrémité de forme échancrée, comme visible sur les figures 2 et 3, une telle forme étant dans son principe connue pour le dénoyautage.

Les figures 2 et 3 font apparaître qu'un manchon 50 est monté coulissant sur la tige 46. Ce manchon 50 possède une forme générale cylindrique, avec en sa partie haute un évidement propre à recevoir un capuchon 51, contribuant à son guidage à coulissement sur la tige 46. A l'autre extrémité, le guidage est assuré par un alésage 55 du manchon 50. Au-dessus de l'alésage 55, l'intérieur du manchon est évidé pour permettre le logement d'un ressort 52 monté en compression entre le capuchon 51 et l'épaulement 56 qui termine le logement de ce ressort 56, vers le bas.

Ainsi, la situation normale est que le manchon 50 descende avec les tiges 46.

A la fin de la descente, le manchon vient en appui par sa périphérie basse sur des organes de centrage que comporte chacun des augets 1.

Du côté du manchon, le centrage est assuré par un plat radial annulaire 61, suivi d'une saillie oblique 62 se terminant par un nouveau plat annulaire 63, l'ensemble possédant une forme générale de Z étiré.

Du côté de l'auget, il est prévu un plat périphérique externe 25 suivi d'une saillie 24 oblique vers l'intérieur.

Les figures montrent encore que chaque auget 20 comporte, en partie basse, un alésage cylindrique 21 comprenant une membrane élastique 27, suivi, vers le haut, d'un évidement tronconique 22, puis d'un évidement tronconique 23 encore plus ouvert. En d'autres termes, la partie supérieure de la face annulaire interne de l'auget est définie par deux lignes droites 22 et 23, d'obliquité croissante. Le mot "ligne droite" est utilisé ici pour définir la forme générale de l'auget, étant observé que la rectilinéarité n'est pas absolue.

On observe encore qu'en regard de chaque orifice 21 de chaque auget, le tapis roulant 10 possède un évidement, qui peut être d'ailleurs plus large que l'orifice 21.

De plus, au droit du poste de dénoyautage, le renfort sous-jacent 13 possède lui aussi un orifice de dégagement de pruneaux, qui peut être de même diamètre que ceux du tapis roulant 10.

Pour sa part, le manchon 50 possède, en dehors des moyens de centrage déjà évoqués, un évidement interne en partie basse, noté 60. Cet évidement 60, qui est de révolution comme l'évidement interne des augets, peut présenter une forme générale de V assez ouvert, avec un fond plat (en haut).

On reviendra ci-après sur l'opération de dénoyautage elle-même. La figure 1 fait apparaître que les noyaux sortent par la goulotte 17, tandis que les pruneaux dénoyautés continuent leur trajet sur le tapis roulant, pour atteindre une position 31-11, où ils sont prêts de tomber dans un réceptacle 70, alors que cette chute est déjà assurée à la position 20-12. Les noyaux, pour leur part, tombent de la goulotte 17 dans le réceptacle 80.

Il s'est avéré possible, à l'aide d'un bol vibrant tel que décrit ci-dessus, de placer automatiquement les pruneaux dans les augets en position sinon verticale du moins relativement peu inclinée sur la verticale. Ce qui est nécessaire, c'est que les pruneaux ne soient pas placés sur les augets en position complètement couchée. Cette condition est réalisée, avec un pourcentage de réussite excellente, par la conjonction de l'effet d'un bol vibrant mettant les pruneaux en position verticale, et de ceux de la chute des pruneaux, sur une longueur limitée.

Qu'il soit vertical ou un peu incliné, le pruneau est redressé par l'action conjointe du manchon 50 et de l'auget 20-5, au niveau du poste de dénoyautage. Cela est assuré par les surfaces respectives en regard de ces deux organes, ainsi que, dans une certaine mesure, par les possibilités de jeux offertes, pour le redressement du pruneau, par l'existence du rappel élastique 52, et éventuellement le jeu entre le manchon 50 et la tige de dénoyautage 46.

Après redressement du pruneau, l'opération de dénoyautage elle-meme s'effectue de manière connue, la tige descendant à l'intérieur du fruit pour venir en prise sur la pointe de son noyau, et expulser celui-ci par l'extrémité opposée. Le noyau traverse alors les différents orifices déjà mentionnés pour atteindre la goulotte 17 tombée dans le réceptacle 80.

Bien entendu, la présente invention n'est pas limitée au mode de réalisation décrit.

Par exemple, au lieu du vérin 43, on peut utiliser tout autre type d'organe moteur, par exemple une came.

Par ailleurs, il est également possible de réaliser un guidage du pruneau lorsqu'il descend du bol vibrant ou de la trémie vers un auget, de manière à faciliter sa mise en position verticale. Un tel guidage pourrait être réalisé notamment par une sorte d'entonnoir dont le débouché serait juste au-dessus de l'auget, à une distance compatible avec la taille normale des pruneaux.

La présente invention a également pour objet un dispositif permettant de dénoyauter simultanément plusieurs fruits à la fois. La variante de l'invention comprend de nombreux éléments semblables à ceux de l'invention. C'est pourquoi, en vue de les différencier, les références des éléments constitutifs et essentiels de la variante de l'invention sont suivies d'un A.

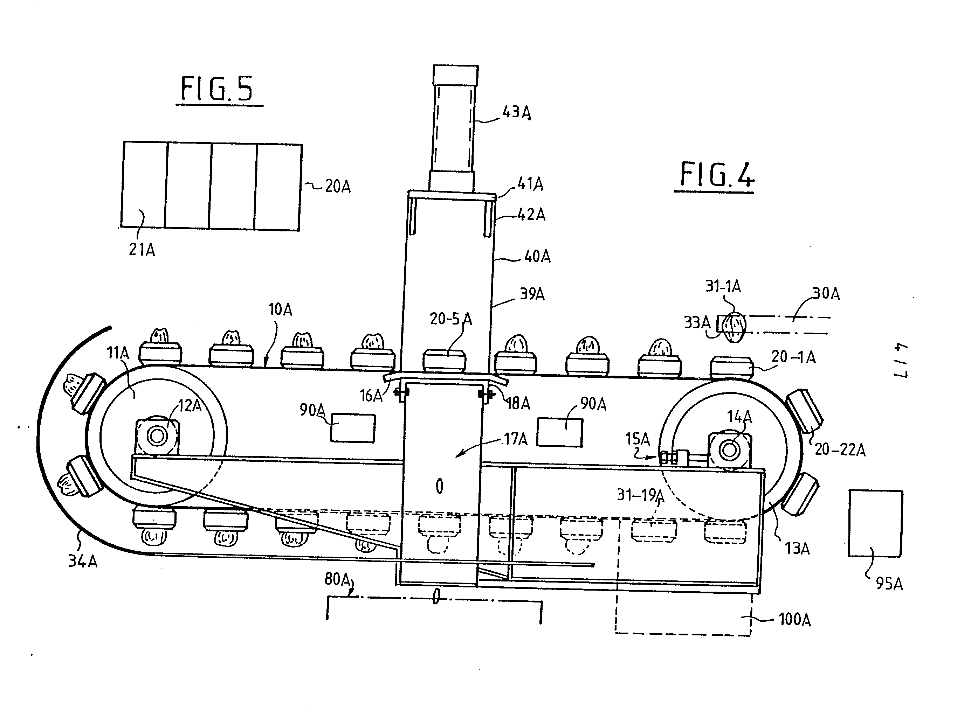

Sur la figure 4, un tapis roulant 10A circule par exemple de la gauche vers la droite autour de deux rouleaux d'extrémité 11A et 13A, portés respectivement par des paliers 12A et 14A, et dont l'un est mû par un moteur (non représenté). Le palier 14A est réglable en position sous l'effet d'une vis 15A pour permettre la tension du tapis 10A.

Il est prévu, par exemple sensiblement au milieu de l'espace compris entre les rouleaux 11A et 13A, un dispositif de dénoyautage proprement dit comprenant plusieurs ensembles tige-manchon que l'on décrira ci-après.

Ceux-ci font intervenir un renfort 16A sous-jacent au tapis 10A, et muni vers le bas d'équerres telles que 18A permettant la fixation d'une goulotte 17A pour l'évacuation des noyaux.

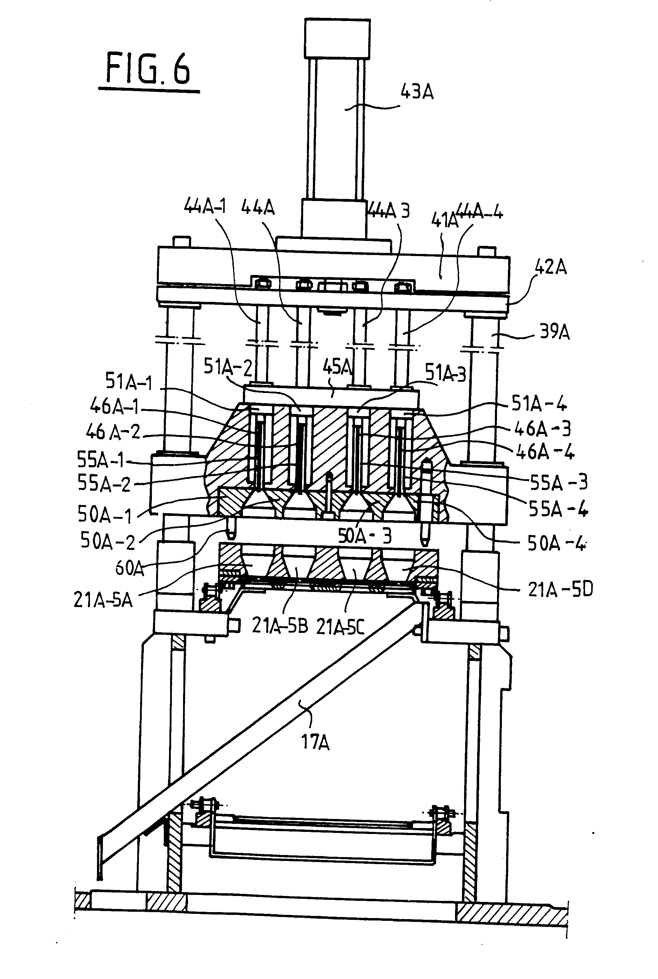

Sur le tapis roulant sont montés des bacs 20A. Comme illustré sur la figure 5, chacun des bacs 20A comprend une rangée d'augets annulaires 21A juxtaposés les uns aux autres. Dans le cas représenté ici, le bac 20A comprend quatre augets annulaires 21A juxtaposés les uns aux autres et semblables à ceux décrits dans le Brevet principal.

En se référant à nouveau à la figure 4, on voit que les bacs 20A sont ici au nombre de 22, et distingués par un suffixe matérialisant leur ordre, à partir de l'endroit où les pruneaux sont placés dans les augets respectifs 21A des bacs successifs 20A.

Cette opération est effectuée par une pluralité de bols vibrants 30A du type cylindrique, placés en parallèle et équipés chacun d'une glissière hélicoïdale 32A. Avantageusement, le nombre de bols est égal à celui d'augets 21A par bac 20A. Pour simplifier le dessin, est seul représenté un bol vibrant 30A. Chacune des glissières 32A permet, sous l'effet de vibrations, de redresser verticalement le pruneau et de le véhiculer jusqu'à la glissière vibrante de distribution 33A, placée directement au-dessus de chacun des augets de centrage 21A des bacs successifs 20A.

Chaque bol délivre les pruneaux un à un dans les augets respectifs 21A des bacs 20A successifs, d'une manière contrôlée, en fonction de l'avancement pas à pas des bacs et du tapis roulant 10A. On voit ici un pruneau 31A-1 qui descend dans un auget 21A-1 du bac 20A-1. Par exemple, les augets 21A ont une largeur de 62 millimètres et une longueur de 210 millimètres. Ils sont par exemple implantés au pas de 63 millimètres. On a représenté ici 22 bacs 20A, soit 88 augets annulaires 21A.

Il est bien entendu que ceci n'est qu'un exemple de réalisation destiné à faciliter la compréhension de la structure du dispositif de dénoyautage selon l'invention et que, dans la pratique, les bacs 20A peuvent comporter beaucoup plus d'augets annulaires 21A.

Par exemple, la vitesse d'avance du tapis roulant 10A est réglable de 0 à 60 bacs 20A à la minute.

Par exemple, la vitesse d'avance pas à pas est de l'ordre de 50 bacs 20A à la minute.

Les augets des bacs 20A suivants sont donc déjà munis de leurs pruneaux, vers la gauche, sur la partie haute du tapis roulant 10A et sur la partie basse de celui-ci jusqu'aux moyens d'évacuation des pruneaux 100A que l'on décrira ci-après.

Les pruneaux placés respectivement dans chaque auget annulaire 21A-5 du bac 20A-5 (non visibles sur la figure 4) vont être dénoyautés simultanément par les moyens d'actionnement des ensembles tige-manchon 40A représentés grossièrement sur la figure 4.

Sur la figure 6, on a représenté, en plus détaillé, les moyens d'actionnement 40A des ensembles tige-manchon.

Ils comprennent un vérin 43A, par exemple pneumatique, monté sur une plaque-support 41A tenue par des équerres 42A sur un bâti 39A. Le vérin 43A actionne simultanément quatre tiges 44A référencées individuellement en 44A-1, 44A-2, 44A-3 et 44A-4 qui, via une connexion de relais 45A, actionnent chacune une tige de dénoyautage 46A proprement dite référencée individuellement en 46A-1, 46A-2, 46A-3 et 46A-4.

Chaque tige de dénoyautage 46A possède une extrémité de forme échancrée, une telle forme étant dans son principe connue pour le dénoyautage.

Sur chaque tige 46A est monté coulissant un manchon 50A référencé individuellement en 50A-1, 50A-2, 50A-3 et 50A-4. Les manchons 50A sont juxtaposés les uns par rapport aux autres.

Chaque manchon 50A possède une forme générale cylindrique, avec en sa partie haute un évidement propre à recevoir un capuchon 51A, référencé individuellement en 51A-1, 51A-2, 51A-3 et 51A-4 contribuant à son guidage à coulissement sur la tige 46A associée. A l'autre extrémité, le guidage est assuré par un alésage 55A référencé individuellement en 55A-1, 55A-2, 55A-3 et 55A-4 du manchon 50A. Au-dessus de l'alésage 55A, l'intérieur du manchon est évidé pour permettre le logement d'un ressort (non représenté) monté en compression entre le capuchon 51A et un épaulement (non représenté) qui termine le logement du ressort vers le bas.

Ainsi, la situation normale est que chaque manchon 50A descende avec chaque tige 46A.

A la fin de la descente, chaque manchon vient en appui par sa périphérie basse sur des organes de centrage 60A assurant le positionnement positif des manchons avec les augets qui lui sont associés contenant les pruneaux à dénoyauter.

La caractéristique essentielle de la variante de l'invention est la multiplicité des ensembles tige-manchon propres chacun à dénoyauter un fruit. Pris individuellement, ces ensembles tige-manchon ainsi que les augets ne sont pas différents de ceux décrits dans l'invention en référence aux figures 1 à 3. Il sera donc possible d'en trouver une description plus détaillée, le cas échéant.

Les figures 4 et 6 font apparaître que les noyaux sortent par la goulotte 17A pour tomber dans le réceptacle 80A, tandis que les pruneaux dénoyautés ou non dénoyautés le cas échéant continuent leur trajet sur le tapis roulant, pour atteindre une position 31A-19 où ils sont évacués par des moyens d'évacuation 100A que l'on décrira ci-après.

Un déflecteur 34A en tôle d'acier inoxydable interdit la chute des pruneaux et cela malgré le retournement des bacs 20A.

Avantageusement, la chute des noyaux est contrôlée par des moyens de détection 90A tels que des cellules photo-électriques. Par exemple, les cellules photo-électriques sont placées de chaque côté de la goulotte 17A.

La chute du noyau permet de contrôler le dénoyautage des pruneaux. Ce contrôle est pris en compte par un automate programmable 95A à registre à décalage propre à commander l'actionnement des moyens d'évacuation en fonction des valeurs captées par les moyens de détection 90A. Par exemple, l'automate programmable 95A est connecté d'une part aux moyens de détection 90A dont le rôle est de capter des informations et d'autre part aux moyens d'évacuation 100A dont le rôle est d'agir en fonction des valeurs captées par les moyens de détection 90A.

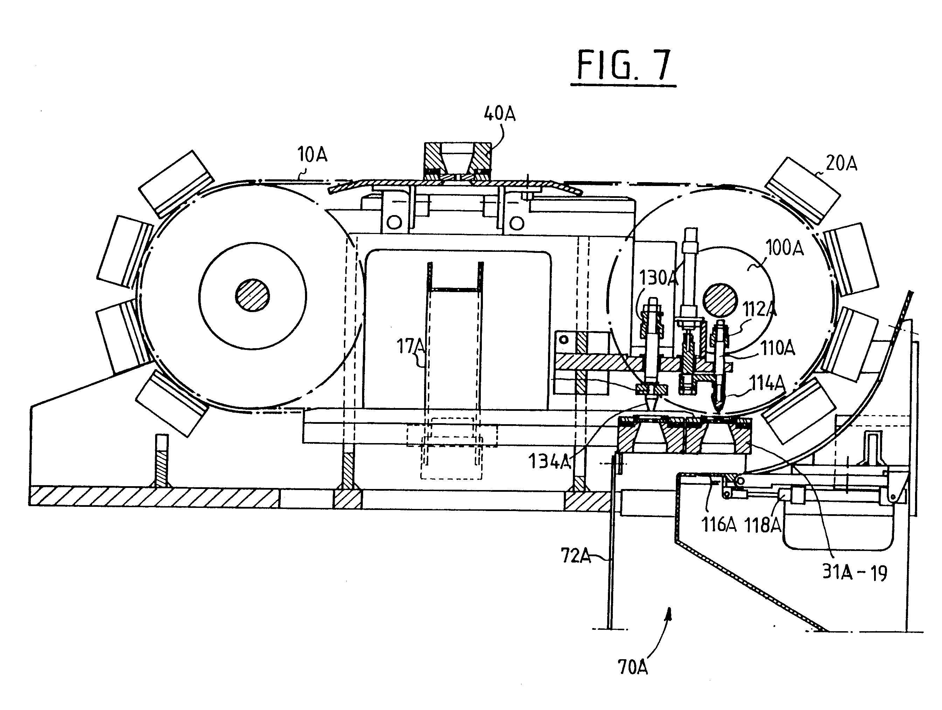

Sur la figure 7, on voit les moyens d'évacuation 100A qui sont placés en aval des moyens d'actionnement des ensembles tige-manchon 40A.

Ils comprennent des premiers moyens d'évacuation 110A propres à évacuer les pruneaux non dénoyautés identifiés par les moyens de détection 90A. Sur les figures 6 et 7, on voit que les moyens 110A comportent quatre vérins 112A de type pneumatique, par exemple de faible course, équipés d'un embout sphérique 114A et propres sur commande de l'automate programmable 95A à évacuer des augets 21A les pruneaux non dénoyautés.

Avantageusement, l'automate programmable 95A commande simultanément l'ouverture d'une trappe 116A située en regard des moyens d'évacuation 110A, permettant ainsi l'évacuation du ou des pruneaux non dénoyautés qui seront éventuellement recyclés ou utilisés à d'autres usages. La commande de l'ouverture de la trappe est effectuée par exemple par quatre vérins 118A situés sous le déflecteur interdisant la chute des pruneaux.

Les moyens d'évacuation 100A comprennent aussi des seconds moyens d'évacuation 130A propres à évacuer les pruneaux dénoyautés identifiés par les moyens de détection 90A. Ces moyens 130A comportent quatre poinçons 132A de faible course équipés d'un embout sphérique 134A. Les seconds moyens d'évacuation 130A sont implantés au pas suivant par rapport aux premiers moyens d'évacuation 110A. Pour simplifier le dessin, seul est représenté un poinçon 132A.

Les quatre poinçons 132A sont commandés par un vérin de type pneumatique (non représenté) par exemple et évacuent simultanément les pruneaux contenus dans les augets 21A.

Les pruneaux dénoyautés sont récupérés dans une cagette 70A par l'intermédiaire d'une goulotte 72A en acier inoxydable.

D'une façon générale, les opérations d'évacuation des pruneaux dénoyautés, le cas échéant non dénoyautés, sont prises en compte par l'automate programmable 95A.

Bien entendu, la variante de l'invention n'est pas limitée aux modes de réalisation décrits. L'alimentation du dispositif de dénoyautage peut se faire manuellement en fonction de la cadence d'utilisation. Néanmoins, la variante de l'invention prévoit l'alimentation entièrement automatique, par l'intermédiaire d'un ensemble de bols et rampes vibrantes.

Les pruneaux sont véhiculés par l'intermédiaire des rampes vibrantes, alimentant des tubes verticaux fermés par une trappe placée au-dessus des augets annulaires 21A des bacs 20A.

L'ouverture de la trappe libérant le pruneau se fait par l'intermédiaire d'un vérin de type pneumatique, commandé par l'avance pas à pas de la machine.

La variante de l'invention met également en application les normes d'hygiène et de sécurité des travailleurs :

- carter de protection équipé d'un arrêt d'urgence inviolable, interdisant la mise en fonctionnement de la machine mal fermée;

- mise en service de la machine en utilisant les deux mains;

- arrêt d'urgence de type coup de poing;

- vidage complet du contenu de la machine soit pour des opérations de nettoyage ou d'arrêt temporaire; et

- utilisation d'interrupteurs fin de course à décalage avec temporisation.

## Revendications

1.- Dispositif pour dénoyauter des fruits, en particulier des pruneaux, du type comprenant des moyens propres à actionner une tige ou poinçon (46) de dénoyautage, pour qu'elle descende au niveau d'un poste de maintien du pruneau, caractérisé en ce que le poste de maintien est défini par un auget annulaire (20) propre à recevoir le pruneau en position sensiblement verticale, ainsi que par un manchon (50) monté coulissant sur la tige (46), et propre à être entraîné avec elle sous l'effet d'un rappel élastique logé en compression à l'intérieur du manchon (52), ce manchon (50) possédant une extrémité libre (60) évidée en correspondance de l'auget et en regard de celui-ci.

2.- Dispositif selon la revendication 1, caractérisé en ce que l'auget (20) possède une partie annulaire interne de révolution, dont la génératrice est constituée vers le haut, d'au moins deux segments de droite (22,23) d'obliquité croissante, tandis que l'évidement homologue (60) du manchon possède une section droite de révolution en forme générale de V ouvert.

3.- Dispositif selon l'une des revendications 1 et 2, caractérisé en ce que le manchon (50) et l'auget (20) possèdent, en périphérie, des moyens (24,25,62,63) permettant leur centrage l'un relativement à l'autre.

4.- Dispositif selon l'une des revendications précédentes, caractérisé en ce qu'il comporte un tapis roulant (10) équipé d'une pluralité d'augets identiques (20) propres à venir séquentiellement en coopération avec l'ensemble tige-manchon (46,50), le tapis roulant étant perforé au droit du passage interne de chaque auget, et muni d'un renfort sous-jacent (6) également perforé, au droit de l'ensemble tige-manchon.

5.- Dispositif selon la revendication 4, caractérisé en ce qu'il comporte, en amont de l'ensemble tige-manchon, un bol vibrant (30) propre à amener les pruneaux un à un, en position sensiblement verticale, dans les augets successifs.

6.- Dispositif selon l'une des revendications précédentes, caractérisé en ce que l'ensemble tige-manchon est actionné par un vérin (43).

7.- Dispositif selon l'une des revendications précédentes, caractérisé en ce qu'il comporte des moyens pour recueillir sélectivement les pruneaux dénoyautés (70), et leurs noyaux (80), après qu'ils aient traversé un auget respectif.

8.- Dispositif selon l'une des revendications précédentes, caractérisé en ce que les moyens d'actionnement (40A) comprennent plusieurs ensembles tige-manchon associés chacun à un auget annulaire (21A).

9.- Dispositif selon la revendication 8, caractérisé en ce que les manchons (50A) et les augets annulaires (21A) possèdent, en leur périphérie, des moyens (60A) permettant le centrage des augets (21A) relativement aux manchons (50A).

10.- Dispositif selon l'une des revendications 8 et 9, caractérisé en ce qu'il comporte un tapis roulant (10A) équipé d'une pluralité de bacs (20A) identiques comprenant chacun une rangée d'augets annulaires (21A) juxtaposés les uns aux autres, lesdits bacs (20A) étant propres à venir séquentiellement en coopération avec les ensembles tige-manchon pour chacun desquels est associé respectivement un auget annulaire (21A), le tapis roulant (10A) étant perforé au droit du passage interne de chaque auget (21A), et muni d'un renfort sous-jacent également perforé, au droit des ensembles tige-manchon.

11.- Dispositif selon la revendication 10, caractérisé en ce qu'il comporte, en amont de chaque ensemble tige-manchon, un bol (30A) vibrant propre à amener les pruneaux un à un, en position sensiblement verticale, dans les augets (21A) respectifs des bacs (20A) successifs.

12.- Dispositif selon l'une des revendications 8 à 11, caractérisé en ce que les ensembles tige-manchon sont actionnés simultanément par un vérin (43A).

13.- Dispositif selon l'une des revendications 8 à 12, caractérisé en ce qu'il comporte des moyens de détection (90A) propres à contrôler la chute des noyaux après qu'ils aient traversé un auget (21A) respectif ainsi que des moyens propres à les recueillir (80A).

14.- Dispositif selon la revendication 13, caractérisé en ce qu'il comporte, en aval de chaque ensemble tige-manchon, des premiers moyens d'évacuation (110A) propres à évacuer respectivement des augets (21A) des bacs (20A) successifs les pruneaux non dénoyautés détectés par les moyens de contrôle (90A) ainsi que des seconds moyens d'évacuation (130A) placés en aval des premiers moyens d'évacuation (110A) et propres à évacuer respectivement des augets (21A) des bacs (20A) successifs les pruneaux dénoyautés.

15.- Dispositif selon l'une des revendications 8 à 14, caractérisé en ce qu'il comporte des moyens (70A) pour recueillir sélectivement les pruneaux dénoyautés et les pruneaux non dénoyautés après qu'ils soient évacués des augets (21A) respectifs des bacs (20A) successifs.

16.- Dispositif selon l'une des revendications 8 à 15, caractérisé en ce que les premiers (110A) et seconds (130A) moyens d'évacuation comprennent des poinçons d'évacuation commandés par au moins un vérin.

17.- Dispositif selon l'une des revendications 8 à 16, caractérisé en ce qu'il comporte un automate programmable (95A) propre à commander l'actionnement des moyens d'évacuation (110A,130A) en fonction des valeurs captées par les moyens de détection (90A).

FIG.1

FIG. 2

# FIG. 3

FIG.5

FIG.4

## FIG.6

43A

44A-1 44A 44A 3 41A 44A-4

42A

39A

51A-1 51A-2 45A 51A-3

51A-4

46A-1

46A-2

46A-3

46A-4

55A-1

55A-2

55A-3

55A-4

50A-1

50A-2 50A-3 50A-4

60A

21A-5D

21A-5A

21A-5B 21A-5C

17A

FIG. 7

FIG. 8

100A

110A

112A

114A

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-1 925 085  (SOCIETE DES ETABLISSEMENTS FORDIMIT) * Page 6, ligne 11 – page 8, ligne 9; figures 1-4,6-11 * | 1-4,6,7 ,9,10 | A 23 N   4/04 |
| | --- | | |
| A | EP-A-0 093 679  (MECANIQUE GENERALE J. DEVILLE & CIE) | | |
| | --- | | |
| A | FR-A-2 380 745  (SOCIETE D'INTERET COLLECTIF AGRICOLE DU PRUNEAU D'AGEN) | | |
| | ----- | | |

**DOMAINES TECHNIQUES RECHERCHES (Int. Cl.4)**

A 23 N

Le présent rapport a été établi pour toutes les revendications

| Lieu de la recherche | Date d'achèvement de la recherche | Examinateur |
|---|---|---|
| LA HAYE | 27-01-1988 | NEHRDICH H.J |

**CATEGORIE DES DOCUMENTS CITES**

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

......................................................................
& : membre de la même famille, document correspondant

EPO FORM 1503 03.82 (P0402)